Europäisches Patentamt

European Patent Office

Office européen des brevets

(19)

(11) Veröffentlichungsnummer: **0 105 198**
**A2**

## (12) EUROPÄISCHE PATENTANMELDUNG

(21) Anmeldenummer: 83108584.0

(22) Anmeldetag: 31.08.83

(51) Int. Cl.³: **G 02 B 5/16, G 02 B 7/26**

(30) Priorität: 07.09.82 DE 3233234

(43) Veröffentlichungstag der Anmeldung: 11.04.84
Patentblatt 84/15

(84) Benannte Vertragsstaaten: **DE FR GB SE**

(71) Anmelder: **SIEMENS AKTIENGESELLSCHAFT, Berlin
und München Wittelsbacherplatz 2,
D-8000 München 2 (DE)**

(72) Erfinder: **Bommer, Heinz, Ing. grad., Steigstrasse 19,
D-7507 Pfinztal (DE)**
Erfinder: **Fiebelkorn, Klaus Dieter, Dipl-Phys.,
Hauptstrasse 19, D-6741 Minfeld (DE)**

(54) **Druckfeste und gasdichte Lichtwellenleiterdurchführung.**

(57) Durchführung eines oder mehrerer Lichtwellenleiter (7) durch eine Behälterwand (1), bei der zur druckfesten Abdichtung der oder die Lichtwellenleiter unmittelbar in Bohrungen gegebenenfalls einer eine Öffnung im Behälter verschliessenden Flanschplatte (2) oder in die Bohrungen durchsetzenden Schutzrohren (9) eingeschmolzen sind, wobei der Lichtwellenleiter (7) aus einem hochschmelzenden Material und die Einschmelzmasse (8) aus einem niedrigschmelzenden Glas besteht und an den Enden des Lichtwellenleiters (7) Steckverbinderteile (10, 11) angeordnet sind.

Die Erfindung findet Verwendung als Durchführung für Lichtwellenleiter durch Reaktorbehälterwände.

SIEMENS AKTIENGESELLSCHAFT
Berlin und München

Unser Zeichen
VPA 82 P 4447 D

Druckfeste und gasdichte Lichtwellenleiterdurchführung

Die Erfindung betrifft eine druckfeste und gasdichte Lichtwellenleiterdurchführung.

In der SIEMENS-Montageschrift E MA/MS 309.220, 12/1978 ist auf Seite 8 eine Druckglasdurchführung abgebildet, bei der eine Öffnung in der Stahlhülle eines Reaktors durch eine Flanschplatte abgedeckt ist. In der Flanschplatte sind Bohrungen angebracht, in die eine Reihe von Schutzrohren für elektrische Leiter mit Glas eingeschmolzen sind. Auch die Isolation der elektrischen Leiter gegenüber den sie umgebenden Schutzrohren wird durch eine Glasschmelze bewirkt. Derartige Glasdurchführungen sind druckfest und absolut gasdicht.

Das Einschmelzen von metallischen Leitern in Glas zur Halterung und Abdichtung wird seit Jahren beherrscht. In der Hauptsache muß nur darauf geachtet werden, daß der Unterschied der Wärmeausdehnungskoeffizienten der beiden durch Einschmelzung miteinander verbundenen Materialien nicht so groß ist, daß er bei Wärmeausdehnung zu einem Bruch der Verbindung führt. Insbesondere sind die Schmelztemperaturen der verwendeten Metalle und Gläser so voneinander verschieden, daß die Metalloberflächen vom flüssigen Glas nur benetzt werden.

Andere Verhältnisse ergeben sich jedoch, wenn diese bekannte Art der Durchführung von metallischen Leitern durch druckfeste Behälterwände auch für Durchführungen von Lichtwellenleitern angewendet werden soll. Hier sind die miteinander zu verbindenden Stoffe derart verwandt, daß mindestens Teile des Lichtleiters in der umgebenden glä-

Li 4 Bz / 06.09.1982

sernen Einschmelzmasse gelöst werden können und dadurch die Eigenschaften des Lichtleiters für die optische Signalführung beeinträchtigt werden.

Der Erfindung lag die Aufgabe zugrunde, die Durchführung von Signalleitungen durch Behälterwandungen mit Hilfe der Glaseinschmelzung auch bei Lichtwellenleitern als Signalleitungen zu ermöglichen.
Diese Aufgabe wird bei einer eingangs genannten Lichtwellenleiterdurchführung dadurch gelöst, daß gemäß der Erfindung ein Lichtwellenleiter aus hochschmelzendem Material mittels einer niedrigschmelzenden Glasschmelze in einer Bohrung einer druckfesten Behälterwand eingeschmolzen ist.

Durch den Unterschied der Schmelztemperaturen der beiden miteinander zu verbindenden Materialien wird verhindert, daß sich die Glasschmelze mit dem Material des Lichtwellenleiters mischt und dessen hochgezüchtete optischen Eigenschaften beeinträchtigt.

Bei einem bevorzugten Ausführungsbeispiel der Erfindung ist der Lichtwellenleiter in einer Bohrung einer eine Behälterwandöffnung verschließenden Flanschplatte eingeschmolzen.

Besteht der Lichtwellenleiter aus einem Quarzstab, so werden vorteilhafterweise mindestens an einem seiner Enden Teile eines optischen Steckverbinders angearbeitet.

Wenn dagegen der Lichtwellenleiter in einem in der Bohrung befestigten Schutzrohr eingeschmolzen ist, so werden an mindestens einem Ende des Schutzrohres Teile eines optischen Steckverbinders angeordnet, in welchen die Enden des Lichtwellenleiters zentriert und befestigt sind.

Das Schutzrohr kann aus Metall, beispielsweise aus Invar-Stahl bestehen. Bei einem anderen Ausführungsbeispiel der Erfindung besteht das Schutzrohr aus Glas. Noch ein anderes Ausführungsbeispiel der Erfindung sieht ein Schutzrohr aus Keramik vor.

Je nach der Beschaffenheit des Schutzrohres ist es zweckmäßig, dieses in die Bohrung einzuschweißen, einzulöten oder mit Glas einzuschmelzen. Es ist auch eine Verschraubung des Schutzrohres in der Bohrung möglich, wenn dafür Sorge getragen wird, die Verschraubung gasdicht zu machen.

Steckverbinderteile, die an dem Schutzrohr befestigt sind, können dort angeschraubt, angequetscht oder angeklebt sein.

Mit Vorteil werden auf einer Flanschplatte mehrere Lichtwellenleiterdurchführungen angeordnet.

Die Erfindung wird an zwei Figuren erläutert.
Die Figur 1 stellt einen Teilschnitt durch eine Behälterwand mit einer Flanschplatte dar.
In Figur 2 ist eine einzelne Durchführung mit einem Schutzrohr im Längsschnitt dargestellt.

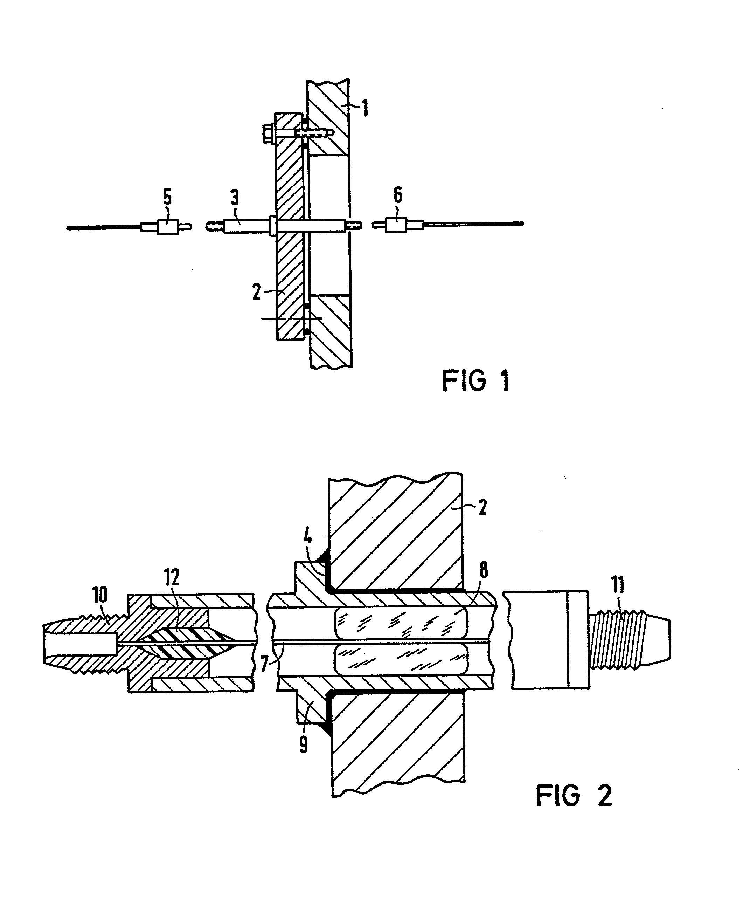

In Figur 1 ist eine Öffnung in einer Behälterwand 1 durch eine Flanschplatte 2 abgedeckt. Eine Bohrung in der Flanschplatte 2 nimmt eine Lichtwellenleiterdurchführung innerhalb eines Schutzrohres 3 auf. Beide Enden des Schutzrohres 3 tragen Teile einer Steckverbindung, auf die entsprechende Steckerteile 5 und 6, von denen Lichtwellenleiter ausgehen, aufgesteckt werden.

In Figur 2 ist in eine Bohrung einer Flanschplatte 2 ein Schutzrohr 9 mit einer Glasschmelze 4 eingeschmolzen. In dem Schutzrohr 9 verläuft ein Lichtwellenleiter 7 aus einem hochschmelzenden Material. Der Lichtwellenleiter 7

- 4 -    VPA 82 P 4447

ist in dem Schutzrohr 9 durch eine niedrigschmelzende Glasschmelze 8 druck- und gasdicht befestigt. An dem linken geschnittenen Ende des Schutzrohres 9 ist ein Teil 10 einer Steckverbindung zu erkennen, in welcher der Lichtwellenleiter 7 zentriert und durch eine Klebeverbindung 12 befestigt ist. Ein gleichartiges Steckverbinderteil 11 befindet sich am rechten Ende des Schutzrohres 9. Die Steckverbinderteile 10 und 11 können im Schutzrohr verschraubt, eingequetscht oder eingeklebt sein.

16 Patentansprüche
2 Figuren

Patentansprüche

1. Druckfeste und gasdichte Lichtwellenleiterdurchführung, d a d u r c h  g e k e n n z e i c h n e t , daß ein Lichtwellenleiter (7) aus hochschmelzendem Material mittels einer niedrigschmelzenden Glasschmelze (8) in einer Bohrung einer druckfesten Behälterwand eingeschmolzen ist.

2. Lichtwellenleiterdurchführung nach Anspruch 1, d a - d u r c h  g e k e n n z e i c h n e t , daß der Lichtwellenleiter (7) in einer Bohrung einer eine Behälterwandöffnung verschließenden Flanschplatte (2) eingeschmolzen ist.

3. Lichtwellenleiterdurchführung nach Anspruch 1 oder 2, d a d u r c h  g e k e n n z e i c h n e t , daß an mindestens einem Ende des Lichtwellenleiters (7) Teile eines optischen Steckverbinders angearbeitet sind.

4. Lichtwellenleiterdurchführung nach Anspruch 1 oder 2, d a d u r c h  g e k e n n z e i c h n e t , daß der Lichtwellenleiter in einem in der Bohrung befestigten Schutzrohr (9) eingeschmolzen ist.

5. Lichtwellenleiterdurchführung nach Anspruch 4, d a - d u r c h  g e k e n n z e i c h n e t , daß an den Enden des Schutzrohres (9) Teile (10, 11) eines optischen Steckverbinders angeordnet sind, in welchen die Enden des Lichtwellenleiters (7) zentriert und befestigt sind.

6. Lichtwellenleiterdurchführung nach Anspruch 3 oder 5, d a d u r c h  g e k e n n z e i c h n e t , daß das Schutzrohr (9) aus Metall besteht.

7. Lichtwellenleiterdurchführung nach Anspruch 3 oder 5, d a d u r c h  g e k e n n z e i c h n e t , daß das Schutzrohr aus Glas besteht.

8. Lichtwellenleiterdurchführung nach Anspruch 3 oder 5, d a d u r c h   g e k e n n z e i c h n e t , daß das Schutzrohr aus Keramik besteht.

9. Lichtwellenleiterdurchführung nach Anspruch 4 oder einem der darauffolgenden Ansprüche, d a d u r c h   g e - k e n n z e i c h n e t , daß das Schutzrohr (9) in die Bohrung eingeschweißt ist.

10. Lichtwellenleiterdurchführung nach einem der Ansprüche 4 bis 8, d a d u r c h   g e k e n n z e i c h - n e t , daß das Schutzrohr (9) in die Bohrung eingelötet ist.

11. Lichtwellenleiterdurchführung nach einem der Ansprüche 4 bis 8, d a d u r c h   g e k e n n z e i c h - n e t , daß das Schutzrohr (9) in die Bohrung mit Glas eingeschmolzen ist.

12. Lichtwellenleiterdurchführung nach einem der Ansprüche 4 bis 8, d a d u r c h   g e k e n n z e i c h - n e t , daß das Schutzrohr (9) in die Bohrung eingeschraubt ist.

13. Lichtwellenleiterdurchführung nach einem der Ansprüche 4 bis 11, d a d u r c h   g e k e n n z e i c h - n e t , daß die Steckverbinderteile (10, 11) an das Schutzrohr (9) angeschraubt sind.

14. Lichtwellenleiterdurchführung nach einem der Ansprüche 4 bis 11, d a d u r c h   g e k e n n z e i c h - n e t , daß die Steckverbinderteile (10, 11) an das Schutzrohr (9) angequetscht sind.

15. Lichtwellenleiterdurchführung nach einem der Ansprüche 4 bis 11, d a d u r c h   g e k e n n z e i c h -

n e t , daß die Steckverbinderteile (10, 11) an das
Schutzrohr (9) angeklebt sind.

16. Lichtwellenleiterdurchführung nach einem der Ansprüche 2 bis 15, d a d u r c h  g e k e n n z e i c h -
n e t , daß auf einer Flanschplatte (2) mehrere Lichtwellenleiterdurchführungen angeordnet sind.

0105198

FIG 1

FIG 2